# EUROPEAN PATENT APPLICATION

(11) **EP 3 361 143 A1**
(43) Date of publication of application: **15.08.2018**
(21) Application number: 17382059.8
(22) Date of filing: 08.02.2017
(51) Int. Cl.: F21S 8/10, F21V 8/00

(54) **LIGHTING DEVICE WITH COLOR INSERT FOR AMBIENT LIGHTING AND METHOD FOR PRODUCING THEREOF**

(71) Applicant: Valeo Iluminacion, 23600 Martos (ES)
(72) Inventor: CABANNE, Damien, 23600 MARTOS (ES); ALBOU, Pierre, 75013 PARIS (FR); DUBOSC, Christophe, 93250 VILLEMOMBLE (FR); PASTOR, Ramon, 23600 Martos (ES); MOISY, Eric, 23009 JAEN (ES); FERNANDEZ, Ricardo, 23600 MARTOS (ES); MARTINEZ, Juan Manuel, 18014 GRANADA (ES); MORENO, Juan-Francisco, 29620 Torremolinos (ES)

(57) **Abstract**

A lighting device (100) and a method for producing thereof. The lighting device (100) comprising a light guide (101) comprising a decoupling element (102); and a light source (103) configured to emit a first light (111), the light source being coupled to an inlet (106) of the light guide (101); the decoupling element (102) being configured to change a color of the first light when the first light (111) impinges on the decoupling element (102) thereby providing a second light (112); and a color of the second light (112) being different to a color of the first light (111).

## Description

### TECHNICAL FIELD

The present invention relates to the field of lighting devices. Particularly, the invention relates to lighting devices which, in addition to the main light, also provide a colored ambient light, that is, two differently colored lights are provided with a same lighting device.

### STATE OF THE ART

The need for lighting devices in the tasks that people daily carry out has made the lighting industry develop new lights and improve existing ones. Currently, a wide range of lighting technologies are available for use in different environments and purposes. Inherently, this has brought to the market lighting devices featuring different sizes, shapes, intensities and power consumptions.

The automotive industry has led many of the advances in lighting devices, mainly due to the essentiality of such devices for driving motor vehicles. In addition to the lighting systems necessary for driving safely when the visual conditions are not sufficient (e.g. at dusk, at night, etc.), the lighting for signaling has also hugely enhanced the safety of the drivers.

Despite the need for lighting devices in a motor vehicle, these devices are also a target of design improvements that increase the appeal of the vehicle, thus they have gained a new purpose besides the main one of providing illumination and signaling functions.

It is clear that the lighting devices of the vehicle must comply with all the existent homologations in a determined region or country that certify that the lights meet all the requirements, therefore the design and appeal of the lighting devices shall not negatively affect the illumination produced by them. However, the inner design of the lighting devices, the light sources and optics used may be varied so that a device is visually more appealing as long as it still provides light correctly.

In this sense, a single automotive headlamp or the like may comprise several lighting devices within a tight volume, thus adding visual features to a headlamp may prove a complex task because there may be not enough space. In order to alleviate the amount of components and devices within a same headlamp, it is often desirable to join lighting devices so as to reduce the space taken, yet still provide the same illumination.

Generally, when two different lights must be emitted, two different light sources are provided so that each of them may emit one of the lights. Thus, there is an interest in emitting two differently colored lights with a single light source.

### DESCRIPTION OF THE INVENTION

A first aspect of the invention relates to a lighting device comprising: a light guide comprising a decoupling element; and a light source configured to emit a first light, the light source being coupled to an inlet of the light guide; the decoupling element being configured to change a color of the first light when the first light impinges on the decoupling element thereby providing a second light; and a color of the second light being different to a color of the first light.

With a single light source of the same lighting device, two lights with different colors can be produced by said device.

The light source emits light beams corresponding to a first light, that is, light of a first color. Since the light source is coupled to the light guide, the light beams may propagate through said light guide undergoing total internal reflection. Part of the first light arrives at an outlet of the light guide so that it may be outcoupled and provide the first light, which may be used, for example, as headlight or light of a daytime running lamp.

Another part of said first light, while propagating through the light guide, arrives at the decoupling element. This means that some light beams make contact with the decoupling element whereas some others do not, in which case the latter are finally outcoupled from the light guide still as beams of the first light. When the light beams reach the decoupling element, said beams are reflected on said decoupling element while, at the same time, their color is changed so that a second light is provided. The second light may then be outcoupled from the light guide through at least one of its edges, the lighting device thus providing a second light that may be suitable as ambient light, for instance. That is, at least part of the first light impinges on the decoupling element thereby providing the second light.

In some preferred embodiments, the decoupling element is overmolded on the light guide. The decoupling element may be directly formed on the light guide with an overmolding process. A material like, for example, plastic or elastomer, is injected into a mold with the light guide so as to produce an overmolded decoupling element. The material injected to provide the decoupling element determines the color of the second light produced by the lighting device; in general, the color components of the surface of the decoupling element on which the light refracts will be the color components of the second light whereas the other color components not present on said surface are not to be present in the second light either, thus the color of the second light may be the same as that of the decoupling element (or the surface of the decoupling element where the first light is reflected).

In some other preferred embodiments, the decoupling element is incorporated to the light guide with an in-mold decoration process.

An already produced decoupling element may be inserted into a mold wherein a material is injected so as to form the light guide with the decoupling element incorporated therein.

In some preferred embodiments, the light guide comprises a surface adapted to refract light, the surface at least partially overlapping a projection of the decoupling element on the light guide. In some of these embodiments, the surface comprises one of: a grained surface, a striped surface, and a plurality of prisms.

Such surface may enhance the effect of having light beams of the first light arriving to the decoupling element. In particular, if the decoupling element is projected on the light guide, an imaginary 3D volume is generated. Accordingly, the surface is at least partially contained within this imaginary 3D volume so that the light beams that refract thereupon may reach the decoupling element instead of being outcoupled from the light guide.

In some embodiments of the invention, the decoupling element is adapted to provide a majority of the second light towards directions not producing total internal reflection within the light guide. This may be achieved, for instance, by making the decoupling element of a material that features an index of refraction within a specific range, this specific range depending upon the index of refraction of both the light guide and the surface adapted to refract light, and the expected angles of incidence of the first light on the surface adapted to refract light (i.e. based on the dimensions of the light guide and how the light from the light source is coupled into the light guide, different angles of incidence may be expected). It then may be determined what will be the angle of incidence, on average, of the first light when it arrives to the decoupling element. Therefore, selecting a decoupling element with a particular index of refraction may maximize the quantity of light reflected on the decoupling element (that is, quantity of light of the second light) that will feature an angle of reflection within a specific range whereby the light beams are not to undergo total internal reflection.

Further, the surface adapted to refract light may also be provided with a geometry (e.g. stripes, pillows, etc.) that enhances transmitting the second light (that is, once it has been reflected on the decoupling element) with angles within a specific range whereby the second light does not undergo total internal reflection.

The light source of any embodiment may comprise, for example, an LED. Further, in some embodiments, the light source comprises a light guide with an outlet for emitting the first light, the outlet being coupled to the inlet of the light guide comprising the decoupling element. That is, the lighting device comprises a first light guide with the decoupling element, and a second light guide (as part of the light source) through which the light source emits the first light.

A second aspect of the invention refers to a method for producing a lighting device comprising: providing a light source configured to emit a first light; providing a light guide with a decoupling element configured to change a color of the first light when the first light impinges on the decoupling element thereby providing a second light, a color of the second light being different to a color of the first light; and coupling the light source to an inlet of the light guide.

Similar advantages as described for the first aspect of the invention may also be applicable to the second aspect of the invention.

In preferred embodiments, a step of providing the light guide with the decoupling element comprises overmolding the decoupling element on the light guide.

In other preferred embodiments, a step of providing the light guide with the decoupling element comprises introducing the decoupling element into the light guide by means of an in-mold decoration process.

In some embodiments, a step of providing the light guide with the decoupling element comprises providing a surface of the light guide adapted to refract light, wherein the surface at least partially overlaps a projection of the decoupling element on the light guide. By way of example, the surface may be provided by treating the light guide so as to produce a geometry on said surface (such as prisms or stripes), or the surface may also be provided with a two-component injection molding process.

In some embodiments, the method further comprises arranging the decoupling element in such a way as to provide a majority of the second light towards directions not producing total internal reflection within the light guide.

A third aspect of the invention relates to an automotive lamp comprising a lighting device according to the first aspect of the invention. The automotive lamp may be one of: a headlamp and a tail lamp.

A fourth aspect of the invention relates to a module comprising an automotive headlamp according to the third aspect of the invention.

Another aspect of the invention relates to an automotive vehicle comprising a module according to the fourth aspect of the invention.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1A-1E show a lighting device in accordance with an embodiment of the invention.
Figures 2A-2B show a lighting device in accordance with another embodiment of the invention.

### DESCRIPTION OF A WAY OF CARRYING OUT THE INVENTION

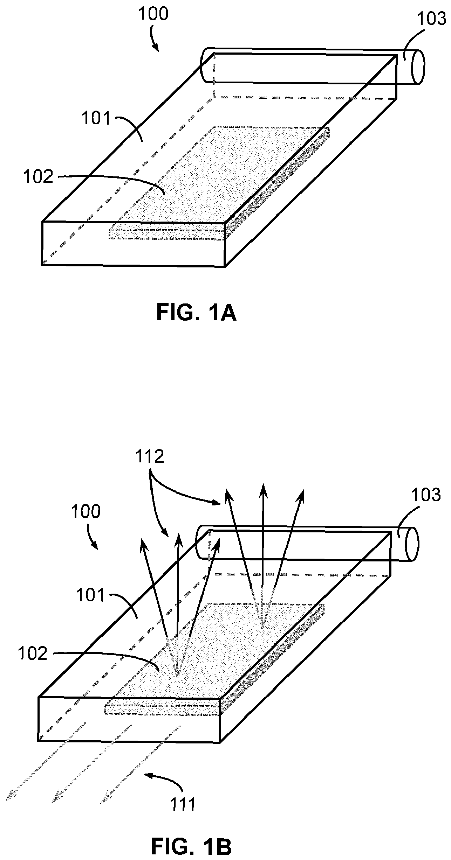

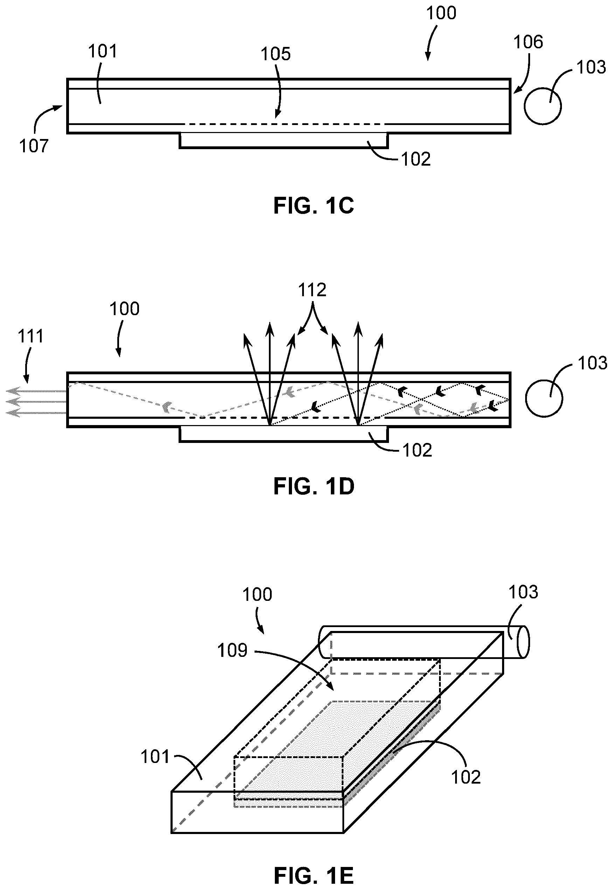

Figures 1A, 1B and 1E show a lighting device 100 in accordance with an embodiment of the invention in a 3D perspective, whereas Figures 1C and 1D show the same lighting device 100 in a 2D perspective.

The lighting device 100 comprises a first light guide 101 in the form of a flat light guide, and a light source 103. The first light guide 101 comprises a light inlet 106, a light outlet 107, and a decoupling element 102. The decoupling element 102 may be incorporated into the light guide 101 as a result of a process such as, for instance, overmolding or in-mold decoration.

The first light guide 101 further comprises a surface 105 adapted to refract light. The surface 105 is arranged so as to at least partially overlap a projection of the decoupling element 102 on the first light guide 101. This can be observed in Figure 1C where surface 105 (shown with a black dashed line for illustrative purposes only) is above the decoupling element 102. Figure 1E illustrates the projection of the decoupling element 102 on the first light guide 101, represented by an imaginary 3D volume 109. Thus at least part of the surface 105 is contained within the 3D volume 109 corresponding to said projection. Preferably, the surface 105 at least partially overlaps a projection on the first light guide 101 of the decoupling element's surface that is in contact with the first light guide 101.

The light source 103 is coupled to the light inlet 106 and may comprise, for example, one or more LEDs, and/or a second light guide with a light emitting device coupled thereto; this second light guide is different from the first light guide 101 of the lighting device 100. The second light guide may have one or more light outlets that is/are coupled to the light inlet 106.

A first light emitted by the light source 103 propagates through the first light guide 101 with total internal reflection (as illustratively represented in Figure 1D with a gray dashed line). Part of the first light propagated this way is outcoupled through the light output 107, thereby providing light 111 that may be used as a main light of the lighting device 100 for example, and is of the same color as the first light emitted by the light source 103. Another part of the first light, upon reaching the surface 105, is refracted and, then, reflected in the decoupling element 102 (as illustratively represented in Figure 1D with black dotted lines). Upon reflection, the decoupling element 102 changes the color of the first light, thereby providing a second light 112 with a color different from the color of the first light.

The second light 112 (illustrated with black solid lines) is outcoupled from the first light guide 101 through a side or edge of the same (e.g. lateral surface), in directions that may be substantially perpendicular to the directions of the outcoupled first light 111. The second light 112 may be particularly suitable for providing ambient light, whereas the first light 111 may be particularly suitable as a main light, for instance for signaling or as a daytime running light.

In a non-limiting example of a lighting device 100, the first light 111 features a white color whereas the second light 112 features a color different from white, for instance, blue, green, etc.

Generally, part of the second light 112 that also propagates through the first light guide 111 with total internal reflection and which may be outcoupled through the light outlet 107 is significantly lower than the first light 111 and, hence, the color of the light outputted through said outlet 107 virtually does not change, that is, any change in the color is visually not perceivable. In this sense, the decoupling element 102 may be arranged on the first light guide 101 such that a majority of the second light is emitted towards directions not producing total internal reflection within the light guide so as to minimize the amount of second light that is outcoupled through the light outlet 107 and maximize the ambient light produced through a lateral side of the light guide 101.

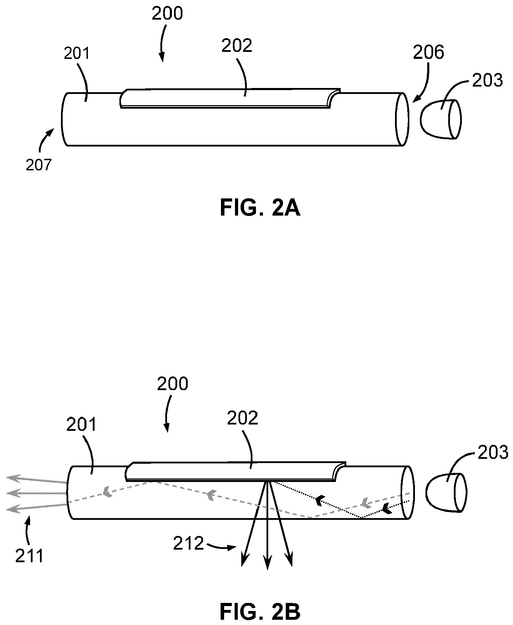

Figures 2A and 2B show a lighting device 200 in accordance with another embodiment of the invention from a 3D perspective.

The lighting device 200 comprises a first light guide 201 including a light inlet 206, a light outlet 207, and a decoupling element 202; the lighting device 200 further comprises a light source 203 coupled to the light inlet 206 of the light guide 201.

The first light guide 201 further comprises a surface (not illustrated) adapted to refract light and which partially overlaps a projection of the decoupling element 202 on the first light guide 201.

The light source 203 emits a first light that is coupled to the first light guide 201. The light undergoes total internal reflection thereby propagating through the light guide 201: part of the light (illustrated with a gray dashed line) goes through the light guide 201 until it is outcoupled through the outlet 207 thereby providing the light 211; and another part of the light (illustrated with a black dotted line) goes through the light guide 201, refracts in the surface (not illustrated, but it is equivalent to surface 105) adapted to refract light, and reaches the decoupling element 202 where it is reflected in the form of a second light 212. Said second light 212, which is the first light emitted by the light source 203 after changing its color due to the reflection in the decoupling element 202, is primarily outcoupled through a lateral side of the first light guide 201 so as to provide a colored ambient light.

The surface adapted to refract light in any of the embodiments shown in Figures 1A-1E and 2A-2B may comprise, for example, a grained surface, a striped surface, or a plurality of prisms.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A lighting device (100, 200) comprising:
a light guide (101, 201) comprising a decoupling element (102, 202); and
a light source (103, 203) configured to emit a first light (111, 211), the light source (103, 203) being coupled to an inlet (106, 206) of the light guide (101, 201);
the decoupling element (102, 202) being configured to change a color of the first light (111, 211) when the first light (111, 211) impinges on the decoupling element (102, 202) thereby providing a second light (112, 212); and
a color of the second light (112, 212) being different to a color of the first light (111, 211).

2. The lighting device (100, 200) of claim 1, wherein the decoupling element (102, 202) is overmolded on the light guide (101, 201).

3. The lighting device (100, 200) of claim 1, wherein the decoupling element (102, 202) is incorporated in the light guide (101, 201) with an in-mold decoration process.

4. The lighting device (100, 200) of any of claims 1-3, wherein the light guide (101, 201) further comprises a surface (105) adapted to refract light, the surface (105) at least partially overlapping a projection of the decoupling element (102, 202) on the light guide (101, 201).

5. The lighting device (100, 200) of claim 4, wherein the surface (105) comprises one of: a grained surface, a striped surface, and a plurality of prisms.

6. The lighting device (100, 200) of any of claims 4-5, wherein the decoupling element (102, 202) is adapted to provide a majority of the second light (112, 212) towards directions not producing total internal reflection within the light guide (101, 201).

7. The lighting device (100, 200) of any of claims 1-6, wherein the light source (103, 203) comprises an LED.

8. The lighting device (100, 200) of any of claims 1-7, wherein the light source (103, 203) comprises a light guide with an outlet for emitting the first light (111, 211), the outlet being coupled to the inlet of the light guide (101, 201) comprising the decoupling element (102, 202).

9. An automotive lamp comprising a lighting device (100, 200) according to any of claims 1-8, the automotive lamp being one of: a headlamp and a tail lamp.

10. A module comprising an automotive lamp according to claim 9.

11. An automotive vehicle comprising a module according to claim 10.

12. A method for producing a lighting device (100, 200) comprising:
providing a light source (103, 203) configured to emit a first light (111, 211);
providing a light guide (101, 201) with a decoupling element (102, 202) configured to change a color of the first light (111, 211) when the first light (111, 211) impinges on the decoupling element (102, 202) thereby providing a second light (112, 212), a color of the second light (112, 212) being different to a color of the first light (111, 211); and
coupling the light source (103, 203) to an inlet (106, 206) of the light guide (101, 201).

13. The method of claim 12, wherein providing the light guide (101, 201) with the decoupling element (102, 202) comprises overmolding the decoupling element (102, 202) on the light guide (101, 201).

14. The method of claim 12, wherein providing the light guide (101, 201) with the decoupling element (102, 202) comprises introducing the decoupling element (102, 202) into the light guide (101, 201) by means of an in-mold decoration process.

15. The method of any of claims 12-14, wherein providing the light guide (101, 201) with the decoupling element (102, 202) comprises providing a surface (105) of the light guide (101, 201) adapted to refract light, wherein the surface (105) at least partially overlaps a projection of the decoupling element (102, 202) on the light guide (101, 201).
